# EUROPEAN PATENT SPECIFICATION

(11) **EP 1 510 718 B1**
(45) Date of publication and mention of the grant of the patent: **13.08.2014**
(21) Application number: 03725731.8
(22) Date of filing: 02.05.2003
(51) Int. Cl.: F16D 48/08, B62M 17/00

(54) **CLUTCH ENGAGEMENT CONTROL DEVICE**
KUPPLUNGSEINGRIFFSSTEUERVORRICHTUNG
DISPOSITIF DE COMMANDE D'ENCLENCHEMENT D'EMBRAYAGE

(30) Priority: 10.05.2002 JP 2002135667
(43) Date of publication of application: 02.03.2005
(73) Proprietor: Yamaha Hatsudoki Kabushiki Kaisha, Iwata-shi, Shizuoka 438-8501 (JP)
(72) Inventor: KOSUGI, Makoto, c/o YAMAHA HATSUDOKI KK, Iwata-shi, Shizuoka 438-8501 (JP); ZENNO, Toru, c/o YAMAHA HATSUDOKI KK, Iwata-shi, Shizuoka 438-8501 (JP); YAMADA, Masaichi, c/o YAMAHA HATSUDOKI KK, Iwata-shi, Shizuoka 438-8501 (JP)
(74) Representative: Grünecker, Kinkeldey, Stockmair & Schwanhäusser
(86) International application number: PCT/JP2003/005609
(87) International publication number: WO 2003/095858

(56) References cited:
- EP-A- 1 251 288
- FR-A- 2 503 058
- JP-A- 4 271 987
- JP-A- 5 310 175
- JP-A- 11 059 555
- JP-A- 61 223 339
- JP-A- 2000 039 036
- US-A- 5 109 967
- US-A- 6 050 379
- US-A1- 2002 096 416

## Description

The present invention relates to a clutch control system, in combination with a friction clutch.

Further, the invention relates to a machine, in particular being a vehicle, preferably an automobile or a motorcycle, comprising a power drive unit, in particular an engine, and a power output means, in particular a drive shaft connectable to a drive wheel, and a combination of a friction clutch and a clutch engagement control system, the clutch being interposed between the power drive unit and the power output means.

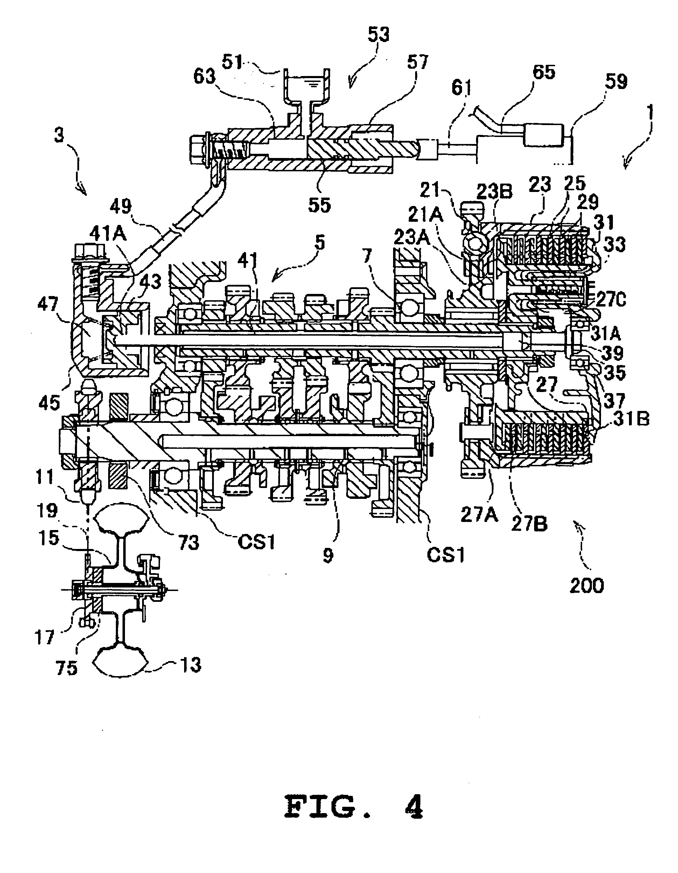

A conventional clutch engagement control system 200 **is** schematically shown in Fig. 4 in a sectional view.

The conventional clutch engagement control system 200 controls engagement of a friction clutch 1 used for motorcycles by means of an actuator 3. The friction clutch 1 is engaged or disengaged to transmit or not to transmit torque from an engine crankshaft (not shown) to a mission shaft 7 made up of a drive shaft of a multistage transmission 5, a type of transmission. Torque transmitted to the mission shaft 7 is transmitted to a countershaft 9 interlocked with the mission shaft 7 via the multistage transmission 5.

The torque transmitted to the countershaft 9 is further transmitted to a rear wheel 13, which is a drive wheel of the motorcycle, via a countershaft sprocket 11 integrally provided with the countershaft 9 on one end of the countershaft 9, a rear wheel sprocket 17 supporting the rear wheel 13 and integrally provided with a rear wheel shaft 15 that transmits drive torque to the rear wheel 13, and a chain 19 wrapped around the countershaft sprocket 11 and the rear wheel sprocket 17.

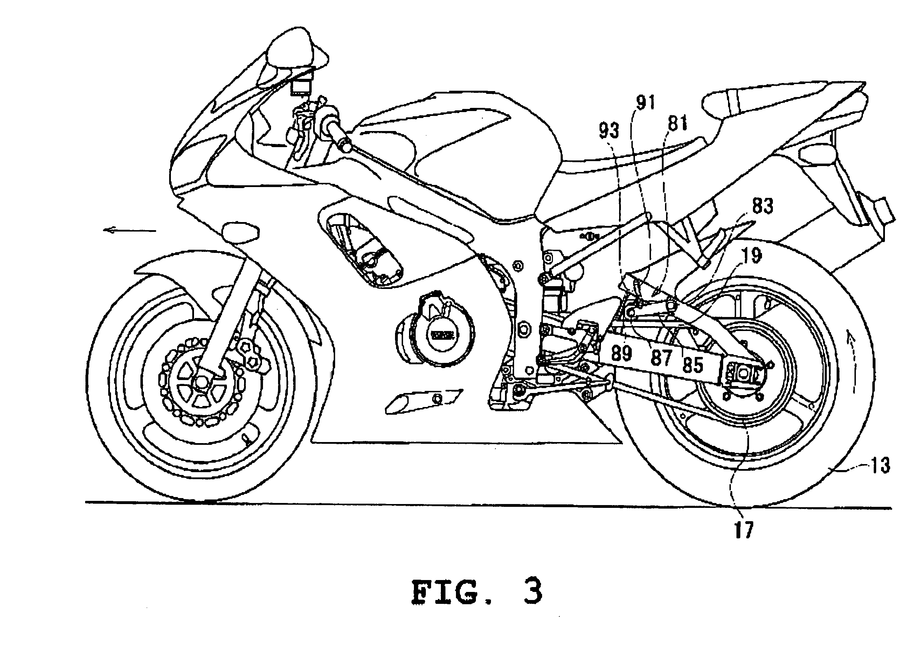

The mission shaft 7 and the countershaft 9 are rotatably disposed in an engine gearcase CS1 for the motorcycle while the rear wheel shaft 13 is rotatably disposed for free rotation on a frame body (see Fig. 3) for the motorcycle.

The friction clutch 1 has a function to gradually transmit the drive force (torque) produced by the engine to the multistage transmission 5 to allow the motorcycle to smoothly start, and a function to temporarily disengage the power transmitted between the engine and the multistage transmission 5 to allow gear changes.

The friction clutch 1 may be a multiplate friction clutch, for example, comprising: an outer driver 23 integrally provided with a gear 21 that engages with a gear (not shown) integrally supported by the engine crankshaft and that is disposed for free rotation around the mission shaft 7, so as to receive torque transmitted from the crankshaft; a plurality of friction discs 25 or friction plates integrally mounted to the outer driver 23; a plurality of clutch plates 29 or friction plates integrally mounted to an inner driver 27; and the inner driver 27 receiving torque transmitted from the outer driver 23 by frictional force generated between the plurality of friction discs 25 and the plurality of clutch plates 29.

The gear 21 is provided for free rotation on one end of the mission shaft 7. The outer driver 23 mounted integrally to a boss portion of the gear 21 is restricted to displace the mission shaft 7 in the rotational axis direction while being rotatable around the mission shaft 7. The inner driver 27 is mounted integrally to one end of the mission shaft 7 (further end from the gear 21).

In this configuration, the inner driver 27 is disposed inside the cylindrical outer driver 23 while the gear 21, the outer driver 23, the inner driver 27 and the mission shaft 7 rotate around the same center, and all are concentrically located.

The cylindrical outer driver 23 has an opening on its one end, which is provided with an engaging portion 23B having an engaging hole 23A that engages with a circular engaging projection 21A disposed in the boss portion of the gear 21. The engaging portion 23B having the engaging hole 23A allows the outer driver 23 to be fixed concentrically to the gear 21.

The friction discs 25 are ring shaped thin plates and an outer peripheral edge of each friction disc 25 is supported with an inner periphery of the cylindrical outer driver 23 such that the plane of each friction disc 25 is generally perpendicular to the rotational axis direction of the mission shaft 7. Such support allows each friction disc 25 to be slightly movable in the rotational axis direction of the mission shaft 7 relative to the outer driver 23 while restricts its rotation in the rotational direction of the mission shaft 7 relative to the outer driver 23.

A predetermined space (with a little longer length than the thickness of the clutch plate 29) is defined between the adjacent planes of the friction discs 25.

The cylindrical inner driver 27 has an opening on its one end provided with a circular flange 27A having approximately same outside diameter as the clutch plate 29, and also supports the plurality of clutch plates 29 with its cylindrical outer periphery. Such support allows each clutch plate 29 to be slightly movable in the rotational axis direction of the mission shaft 7 relative to the inner driver 27 while restricts its rotation in the rotational direction of the mission shaft 7 relative to the inner driver 27.

The inner driver 27 is fixed to one end of the mission shaft 7 with its flange 27A located on the side of the engaging portion 23B of the outer driver 23.

The clutch plates 29 are ring shaped thin plates, and an inner peripheral edge of each clutch plate 29 is supported with an outer periphery of the cylindrical inner driver 27 as described above such that the plane of each clutch plate 29 is generally perpendicular to the rotational axis direction of the mission shaft 7.

A predetermined space (witch a little longer length than the thickness of the friction disc 25) is defined between the adjacent planes of the clutch plates 29.

Each of the clutch plates 29 has an outside diameter slightly smaller than the inside diameter of the cylindrical outer driver 23. Each of the friction discs 25 has an inner diameter slightly larger than the outside diameter of the cylindrical inner driver 27.

The friction discs 25 and the clutch plates 29 are alternately located in the rotational axis direction of the mission shaft 7. A little space is defined in the rotational axis direction of the mission shaft 7 between each friction disc 25 and clutch plate 29.

A pressing portion 27B made up of the flange 27A of the inner driver 27 is provided on outsides of each friction disc 25 and clutch plate 29 located alternately as described above as well as on outer sides of the rotational axis direction of the mission shaft 7 and on the side of the engaging portion 23B of the outer driver 23. The friction discs 25 and the clutch plates 29 are interposed between the pressing portion 27B and a pressure plate 31, to be discussed later, in the rotational axis direction of the mission shaft 7 to generate frictional force between each friction disc 25 and clutch plate 29. The pressing portion 27B is generally a plane approximately parallel to each plane of the friction discs 25 and the clutch plates 29.

The friction clutch 1 is provided with a circular pressure plate 31 on the outsides of each friction disc 25 and clutch plate 29 located alternately as described above as well as on the outer sides of the rotational direction of the mission shaft 7 and on the opposite side of the engaging portion 23B of the outer driver 23.

The pressure plate 31 is provided with a plurality of guide portions 31A disposed integrally with the cylindrical inner driver 27 inside of the inner driver 27 and engaging with plural cylindrical guide portions 27C which extend in the rotational axis direction of the mission shaft 7. The guide portions 27C and the guide portions 31A allow the pressure plate 31 to be located movably in the rotational axis direction of the mission shaft 7 relative to the inner driver 27 as well as to rotate together with the inner driver 27.

The pressure plate 31 has a plane pressing portion 31B approximately parallel to each plane of the friction discs 25 and the clutch plates 29.

Plural compression springs 33 are provided so as to respectively enclose the plurality of cylindrical guide portions 27C. The pressure plate 31 is urged by each compression spring 33 in the direction in which the pressing portion 31B of the pressure plate 31 approaches the pressing portion 27B of the inner driver 27.

When the friction clutch 1 is being engaged, the pressure plate 31 is displaced and urged toward the flange 27A of the inner driver 27 by the compression springs 33. The friction discs 25 and the clutch plates 29 are interposed and pressed between the pressing portion 27B of the inner plate 27 and the pressing portion 31B of the pressure plate 31 to generate frictional force between each friction disc 25 and clutch plate 29. This allows torque to be transmitted from the outer driver 23 to the inner driver 27.

On the other hand, when the friction clutch 1 is being disengaged (being disconnected and with no torque transmitted), the pressure plate 31 is displaced rightward in Fig. 4 (in the direction in which the pressing portion 31B of the pressure plate 31 is displaced apart from the pressing portion 27B of the inner driver 27) by a push rod 35 discussed later. The pressing portion 31B of the pressure plate 31 is spaced apart from the friction disc 25 positioned rightmost in Fig. 4 (positioned adjacent to the pressing portion 31B of the pressure plate 31).

Thus, each friction disc 25 and clutch plate 29 are not pressed to each other. A small space is defined in the rotational axis direction of the mission shaft 7 therebetween. No frictional force allowing torque to be transmitted is generated between each friction disc 25 and clutch plate 29. The pressure plate 31 is adapted to be displaced and controlled by the clutch engagement control system 200.

Next will be described the conventional clutch engagement control system 200.

The conventional clutch engagement control system 200 comprises the actuator 3. The actuator 3 and the compression springs 33 displace the pressure plate 31 in the rotational axis direction of the mission shaft 7. Based on the displacement, the friction clutch 1 is engaged (with torque transmitted) or disengaged (with no torque transmitted).

The pressure plate 31 has a center portion engaging with one end of the push rod 35 via a deep groove ball bearing 37, for example, and also can rotate around the push rod 35. The other end of the push rod 35 engages with one end of the cylindrical mission shaft 7 positioned inside thereof.

When force larger than the urging force produced by the compression springs 33 displaces the push rod 35 rightward in Fig. 4 (in the rotational axis direction of the mission shaft 7 in which the pressing portion 31B of the pressure plate 31 is spaced apart from the pressing portion 27B of the inner driver 27), the push rod 35 pushes and displaces the pressure plate 31 in the same manner accordingly.

On the other hand, when the push rod 35 is displaced leftward in Fig. 4, the pressure plate 31 pushes the push rod 35 by urging force produced by the compression springs 33 and is also displaced in the same manner.

Inside the cylindrical mission shaft 7 is provided with a ball 39 adjacent to the other end of the push rod 35 as well as a push rod 41 adjacent to the ball 39.

The push rod 41 has one end 41A protruding from the other end (the end opposite to the one provided with the inner driver 27) of the cylindrical mission shaft 7.

The protruding end 41A of the push rod 41 is integrally provided with a piston 43 included in the actuator 3. The piston 43 is guided by a cylinder body 45 and slidable in the rotational axis direction of the mission shaft 7.

When hydraulic oil as compressed fluid is supplied to a space 47 enclosed by the piston 43 and the cylinder body 45, the piston 43 is pressed and displaced rightward in Fig. 4. Accordingly, the pressure plate 31 is pressed rightward in Fig. 4 (in the rotational axis direction of the mission shaft 7 in which the pressing portion 31B of the pressure plate 31 is spaced apart from the pressing portion 27B of the inner driver 27) via the push rod 41, the ball 39, the push rod 35 and the deep groove ball bearing 37.

As described above, when the pressure plate 31 is pressed rightward in Fig. 4 and the pressing portion 31B of the pressure plate 31 is spaced apart from the friction discs 25, the friction clutch 1 is being disengaged.

When the hydraulic oil supplied is gradually drained out of the enclosed space 47 with the friction clutch 1 being disengaged, the piston 43 is gradually displaced leftward in Fig. 4 (in the direction in which the volume of the space 47 decreases).

The reason for this displacement is because the pressure plate 31 is normally urged by the compression springs 33 so as to be displaced leftward in Fig. 4 (in the rotational axis direction of the mission shaft 7 in which the pressing portion 31B of the pressure plate 31 approaches the pressing portion 27B of the inner driver 27). This urging force also allows the piston 43 to normally be urged leftward in Fig. 4 via the deep groove ball bearing 37, the push rod 35, the ball 39 and the push rod 41.

When the piston 43 is gradually displaced leftward in Fig. 4 as described above, the pressure plate 31 is also gradually displaced leftward in Fig. 4. The pressing portion 31B of the pressure plate 31 then touches the nearest friction disc 25 of the friction discs, allowing the friction clutch 1 to start being engaged. In other words, the friction clutch 1 starts transmitting power.

When the piston 43 is further displaced leftward in Fig. 4, the pressure force of the pressure plate 31 toward the friction discs 25 increases. In other words, this allows the pressing portion 27B of the inner driver 27 and the pressing portion 31B of the pressure plate 31 to clamp the friction discs 25 and the clutch plates 29 with increased force. Subsequently no slide is made between the friction discs 25 and the clutch plates 29, under the condition of which, the friction clutch 1 is fully engaged.

Decreasing the pressure of the hydraulic oil in the space 47 enclosed by the piston 43 and the cylinder body 45 with the friction clutch 1 fully engaged allows the piston 43 and the push rod 41 to be further displaced leftward in Fig. 4. The push rod 41 and the ball 39 may be spaced apart from each other. Even in such case, the position of the pressure plate 31 relative to the inner driver 27 stays nearly the same as in the case that the friction clutch 1 is fully engaged, or almost remains unchanged.

Supply or drainage of hydraulic oil to or from the space 47 enclosed by the piston 43 and the cylinder body 45 is performed through a master cylinder 53 comprising a reserve tank 51 and connected to the space 47 via a hydraulic oil passage 49 made up of pipes.

The master cylinder 53 comprises a master cylinder body 55 and a piston 57 engaging and sliding with the master cylinder body 55. The piston 57 has one end protruding outward of the master cylinder body 55. The piston 57 also has an end face of the end touching one end face of an output shaft 61 of a small actuator 59.

The small actuator 59 including a small hydraulic cylinder and a small control motor operates under the control of a control device (not shown) comprising, for example, a ROM and a CPU for controlling the operations of the small actuator 59 based on the control patterns preset therein.

When the friction clutch 1 is disengaged, the output shaft 61 of the small actuator 59 is displaced leftward in Fig. 4 (in the direction in which the output shaft 61 protrudes). The displacement of the output shaft 61 allows the piston 57 to be pressed leftward in Fig. 4. Therefore, the volume in a space 63 enclosed by the master cylinder body 55 and the piston 57 decreases. This decrease in volume allows the hydraulic oil staying in the space 63 to run through the hydraulic oil passage 49 and to be supplied to the space 47 enclosed by the cylinder body 45 and the piston 43. The piston 43 is then displaced rightward in Fig. 4.

The rightward displacement of the piston 43 allows the pressure plate 31 to be pressed rightward in Fig. 4 via the push rod 41, the ball 39, the push rod 35, and the deep groove ball bearing 37. This pressed force is larger than force produced by the compression springs 33 to urge the pressure plate 31 leftward in Fig. 4, which results in rightward displacement of the pressure plate 31 in Fig. 4. The pressing portion 31B of the pressure plate 31 is spaced apart from the friction discs 25, and the friction clutch 1 is then disengaged.

Next, description will be made of the example in which the friction clutch 1 is reengaged.

When the friction clutch 1 is being disengaged, the piston 43 of the actuator 3 presses the pressure plate 31 rightward in Fig. 4 via the push rod 41, the ball 39, the push rod 35 and the deep groove ball bearing 37. The pressing portion 31B of the pressure plate 31 remains apart from the friction discs 25. Even under this condition, the pressure plate 31 is urged leftward in Fig. 4 by the compression springs 33 so that the piston 43 is urged leftward in Fig. 4 via the deep groove ball bearing 37, the push rod 35, the ball 39 and the push rod 41.

The urged piston 43 further allows the piston 57 of the master cylinder 53 to be urged rightward in Fig. 4 (in the direction in which the piston 57 presses the output shaft 61 of the small actuator 59) via the hydraulic oil running from the hydraulic passage 49.

When the output shaft 61 of the small actuator 59 is gradually displaced rightward in Fig. 4 (in the direction in which the output shaft 61 retracts into a small actuator body 65) with the friction clutch 1 being disengaged, the piston 57 pressed by the output shaft 61 of the small actuator 59 is accordingly displaced rightward in Fig. 4. The displacement of the piston 57 results in a flow of hydraulic oil from the space 47 enclosed by the cylinder body 45 and the piston 43 to the space 63 enclosed by the master cylinder body 55 and the piston 57 through the hydraulic oil passage 49.

The displacement of hydraulic oil allows the piston 43 urged by the pressure plate 31 and the compression springs 33 to be gradually displaced leftward in Fig. 4. Accordingly, the pressure plate 31 is also gradually displaced leftward in Fig. 4 to shortly start engaging the friction clutch 1 (start transmitting power). When the pressure.plate 31 is further displaced leftward in Fig. 4, the urging force produced by the compression springs 33 results in increased frictional force generated between the friction discs 25 and the clutch plates 29. Almost no slide is made between the friction discs 25 and the clutch plates 29. The friction clutch 1 is fully engaged.

The cylinder body 45 of the actuator 3, the master cylinder body 55 of the master cylinder 53, and the small actuator body 65 of the small actuator 59 are fixed integrally, for example, to the engine gear case CS1 respectively.

The piston 43 of the actuator 3 has diameter larger than that of the piston 57 of the master cylinder 53. According to Pascal's law, displacing the piston 57 requires less force than the one to displace the piston 43. Therefore, displacing the output shaft 61 of the small actuator 59 results in increased force to displace the pressure plate 31.

Next will be described the engagement velocity at which the conventional clutch engagement control system 200 reengages the friction clutch 1.

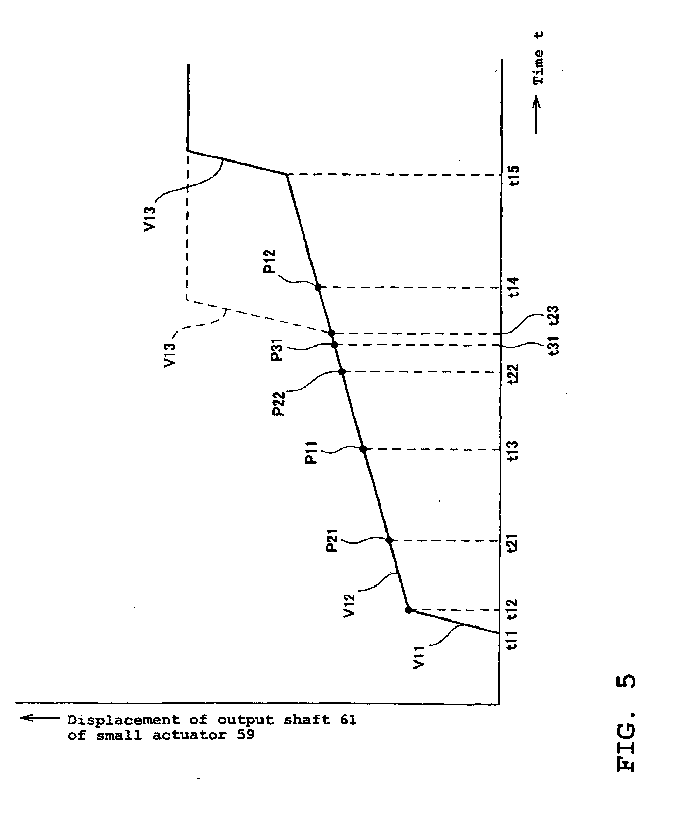

Fig. 5 illustrates an example of engagement velocity at which the conventional clutch engagement control system 200 reengages the friction clutch 1.

The horizontal axis and the vertical axis of Fig. 5 represent elapsed time and displacement of the output shaft 61 of the small actuator 59 respectively. The upward (positive) direction in the vertical axis of Fig. 5 corresponds to the rightward displacement of the output shaft 61 in Fig. 4 (in the direction in which the output shaft 61 retracts into the small actuator body 65) .

For example, when the friction clutch 1 is reengaged to start the motorcycle, the output shaft 61 starts to be displaced rightward in Fig. 4 at time t11 and continues to be displaced at relatively high velocity, V11, until time 12. Until the motorcycle starts, the gear 21, the outer driver 23 and the friction discs 25 shown in Fig. 4 are rotating according to the engine rotation while the clutch plates 29, the inner driver 27 and the pressure plate 31 are not rotating.

When the friction clutch 1 is being disengaged, normally there is a gap of approximately 2mm between the pressing portion 31B of the pressure plate 31 shown in Fig. 4 and the friction disc 25 positioned rightmost in Fig. 4. The reason for this displacement at high velocity, V11, is because to reduce the time required for engaging the friction clutch 1, which is achieved by displacing the pressing portion 31B by the major portion of the distance in the gap at as high velocity as possible.

The displacement velocity of the output shaft 61 is then decreased at time t12 to velocity, for example, V12 that is approximately the same as the displacement velocity at which the clutch is half-engaged.

The rightward displacement of the output shaft 61 in Fig. 4 continues at velocity V12. This allows the pressure plate 31 to be displaced in the direction (leftward in Fig. 4) so as to approach the pressing portion 27B of the inner driver 27 at velocity corresponding to the velocity V12 (or at velocity corresponding to the ratio between pressed areas of the piston 57 of the master cylinder 53 and of the piston 43 of the actuator 3). Then, the point to start engaging the clutch, P11, is reached at t13.

At the point to start engaging the clutch, P11, the pressing portion 31B of the pressure plate 31 touches the friction disc 25 (positioned adjacent to the pressing portion 31B) and torque starts to be transmitted between the friction discs 25 and the pressure plates 29.

Then, the rightward displacement of the output shaft 61 in Fig. 4 further continues at velocity V12, which results in a moderate enhancement of power transmissibility between the friction discs 25 and the pressure plates 29. The point to fully engage the clutch with almost no slide made therebetween, P12, is reached at time t14. Following that, the displacement velocity of the output shaft 61 is increased to velocity V13 after a predetermined time period, that is, at time t15.

The point to start engaging the clutch, P11, varies depending on temperature as well as on how much the friction discs 25 and the clutch plates 29 wear out by engaging and disengaging the friction clutch 1.

If the point to start engaging the clutch varies from P11 at time t13 to P21 at t21, the point to fully engage the clutch, P22, is reached at time t22 before the point to start engaging, P12, the point to fully engage the clutch, due to the earlier start of clutch engagement. Thus, the displacement velocity of the output shaft 61 may be increased at time t23 to velocity V13 as shown by dashed lines in Fig. 5.

However, the point to start engaging the clutch varies depending on temperature as described above, there may be a case where the point to start engaging the clutch is delayed to P31 at time t31. In this case, if the output shaft 61 of the small actuator 59 is still displaced at high velocity, V13, at time t23 as shown by dashed lines in Fig. 5, the pressing portion 31B of the pressure plate 31 suddenly presses the friction discs 25 before the friction clutch 1 is fully connected, that is, before the friction clutch 1 is fully engaged. Then, the friction clutch 1 is suddenly connected, in other words, the friction clutch 1 is suddenly and fully engaged. This sharply increases the rotational speed of the rear wheel 13 connected to the engine (not shown) via the mission shaft 7 and the countershaft 9 and causes shock when the motorcycle starts.

There may be another case where the engine is stopped due to a sharp increase in load applied to the engine.

Therefore, the conventional clutch engagement control system 200 allows sufficient time between times t12 and t15, presetting the time period therebetween longer.

In Fig. 5, the description is made of the engagement velocity of the friction clutch 1 by means of the vertical axis to designate displacement of the output shaft 61 of the small actuator 59. But it is not limited to that.

For example, the description may be made of the engagement velocity with the following displacements: They include displacements of the pressure plate 31, the push rod 35 and the push rod 41 in the rotational axis direction of the mission shaft 7, and displacement of the piston 43 of the actuator 3 and that of the piston 57 of the master cylinder 53.

However, using parameters other than the displacement of the output shaft 61 of the small actuator 59 to indicate the engagement velocity of the friction clutch 1 results in almost no indication of portion corresponding to velocity V13 in Fig. 5 (the portion showing the velocity of the output shaft 61 after the friction clutch 1 was fully engaged).

The reason for no indication is because the pressure plate 31 is no longer displaced after the friction clutch 1 was fully engaged. Accordingly, the push rod 35 is no longer pressed and displaced by the pressure plate 31.

In order to allow the conventional clutch engagement control system 200 to perform engagement control of the friction clutch 1 without shock for engaging the clutch, even if the point to start engaging the friction clutch varies depending on temperature, it takes relatively long time as a sufficient time is required to slowly displace the pressure plate 31 at around the point to start engaging the clutch.

In the example of the conventional system, the description is made of the problems when the motorcycle starts, however, using the multistage transmission 5 for shifting gears also causes the same problems.

Document JP 2000 39036 A shows a clutch engagement control system and a friction clutch, the control system provided to engage the friction clutch comprising a plurality of friction plates and being provided with a pressure plate by means of an actuator, and furthermore comprising: first detecting means for detecting the state of power transmission over the friction clutch, and control means for controlling the actuator, so as to displace the pressure plate in the direction in which the friction plates are engaged at a first engagement velocity until the first detecting means detects the start of the power transmission, and to change the engagement velocity to a non-constant second engagement velocity lower than the first engagement velocity when the first detecting means detects the start of the power transmission such that the friction clutch starts transmitting power after no power transmitted over the friction clutch.

It is, therefore, an object of the present invention to provide a clutch engagement control system that allows quick clutch engagement without shock even if the point to start engaging the clutch varies.

This object is solved by the features of claim 1. Further improvements are laid down on the subclaims.

Besides, it is an object of the invention to improve a machine of the above kind so its clutch has an enhanced performance. This object is solved by the features of claim 12.
Fig. 1 is a schematic sectional view illustrating a clutch engagement control system according to an embodiment of the present invention.
Fig. 2 illustrates an example of engagement velocity at which a friction clutch is reengaged by the clutch engagement control system.
Fig. 3 illustrates a chain tension detecting sensor mounted to a motorcycle body.
Fig. 4 is a schematic sectional view illustrating the conventional clutch engagement control system.
Fig. 5 illustrates an example of engagement velocity at which the friction clutch is reengaged by the conventional clutch engagement control system.

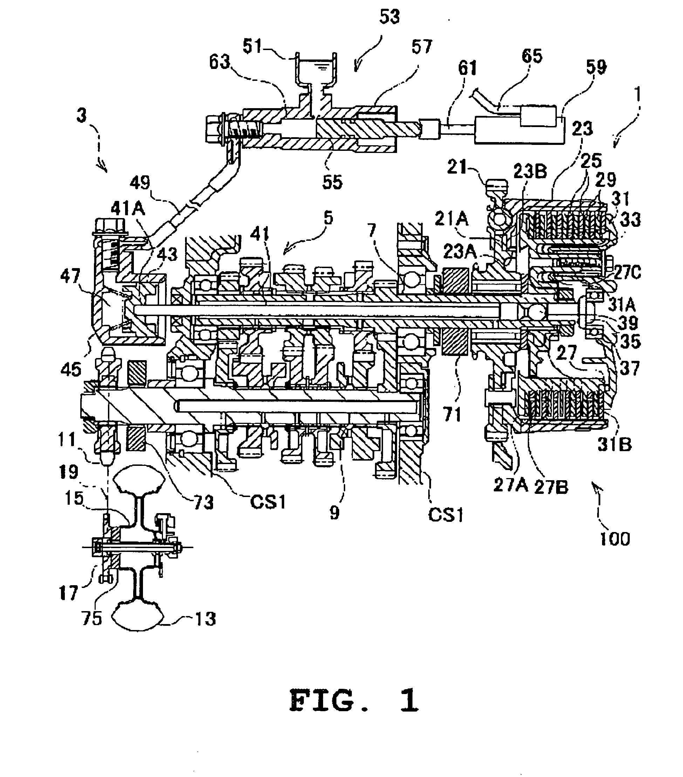

Fig. 1 is a schematic sectional view illustrating a clutch engagement control system 100 according to an embodiment of the present invention.

The clutch engagement control system 100 is constructed almost the same as the conventional clutch engagement control system 200 except having a magnetostrictive sensor 71 for detecting torque generated on the mission shaft 7.

Description will here be made of the magnetostrictive sensor 71 as an example of a torque sensor for detecting torque generated on the mission shaft 7.

Ferromagnetic materials such as iron or nickel are placed in a magnetic field, which causes distortion and change in dimension thereof. On the other hand, when ferromagnetic materials are subjected to distortion, magnetization characteristics thereof change. The magnetostrictive sensor detects load and torque applied to the ferromagnetic materials by means of the phenomenon that the magnetization characteristics thereof change.

The mission shaft 7 is comprised of ferromagnetic materials made of iron, steel, nickel or their alloys. The mission shaft 7 is also magnetized in the rotational axis direction. When the motorcycle starts, for example, engagement of the friction clutch 1 starts, which generates torque on the mission shaft 7 and accordingly torsion on the mission shaft 7. The magnetostrictive sensor 71 detects magnetization components in the circumferential direction of the mission shaft 7 resulted from the torsion described above, thereby detecting the torque generated on the mission shaft 7. The magnetostrictive sensor may be referred as magnetostrictive torque meter.

In Fig. 1, the magnetostrictive sensor 71 is placed between the engine gearcase CS1 positioned on the side of the friction clutch 1 and the gear 21 engaged with the engaging portion of the outer driver 23 of the friction clutch 1 so as to enclose the mission shaft 7 around. But, the position of the magnetostrictive sensor 71 is not limited to that. The magnetostrictive sensor 71 may be placed in any position where torque (torsional moment) applied to the mission shaft 7 can be detected.

The clutch engagement control system 100 operates almost in the same manner as the conventional clutch engagement control system 200 except engaging the friction clutch 1 at first engagement velocity higher than the conventional engagement velocity, V12, at which the clutch is half-engaged, until the magnetostrictive sensor 71 detects the start of power transmission over the friction clutch 1 (before detecting the point to start engaging the clutch), and changing the engagement velocity to engage the friction clutch 1 to second engagement velocity lower than the first engagement velocity, when the magnetostrictive sensor 71 detects the start of power transmission over the friction clutch 1 such that the friction clutch 1 starts transmitting power after no power (torque) transmitted over the friction clutch 1 (with the friction clutch 1 disconnected) and the power transmissibility is gradually enhanced.

The clutch engagement control system 100 controls drive velocity of the actuator 3 for displacing the pressure plate 31 clamping, together by the inner driver 27, the friction plates, or the plural friction discs 25 and the plural clutch plates 29, on which frictional force to transmit torque over the friction clutch 1 is generated, in the direction in which the friction plates are engaged. In other words, it controls leftward displacement velocity of the piston 43 included in the actuator 3 in Fig. 4.

Under the control described above, the piston 43 is displaced leftward in Fig. 1 such that the pressure plate 31 is displaced leftward in Fig. 1 (in the direction in which the friction discs 25 and the clutch plates 29 are clamped) at the first engagement velocity that causes less shock even at the start of engagement of the friction clutch 1, until the magnetostrictive sensor 71 detects the start of the engagement of the friction clutch 1 (the start of power transmission over the friction clutch 1).

In addition, under the above control, the piston 43 is displaced leftward in Fig. 1 such that the pressure plate 31 is accordingly displaced leftward in Fig. 1 at the second engagement velocity (such as engagement velocity at which the friction clutch 1 is half-engaged) lower than the first engagement velocity, when the magnetostrictive sensor 71 detects the start of the engagement of the friction clutch 1 (the start of power transmission over the friction clutch 1).

Displacement velocity of the cylinder 43 of the actuator 3 is controlled based on the displacement velocity of the output shaft 61 of the small actuator 59 in the embodiment of the present invention as described above.

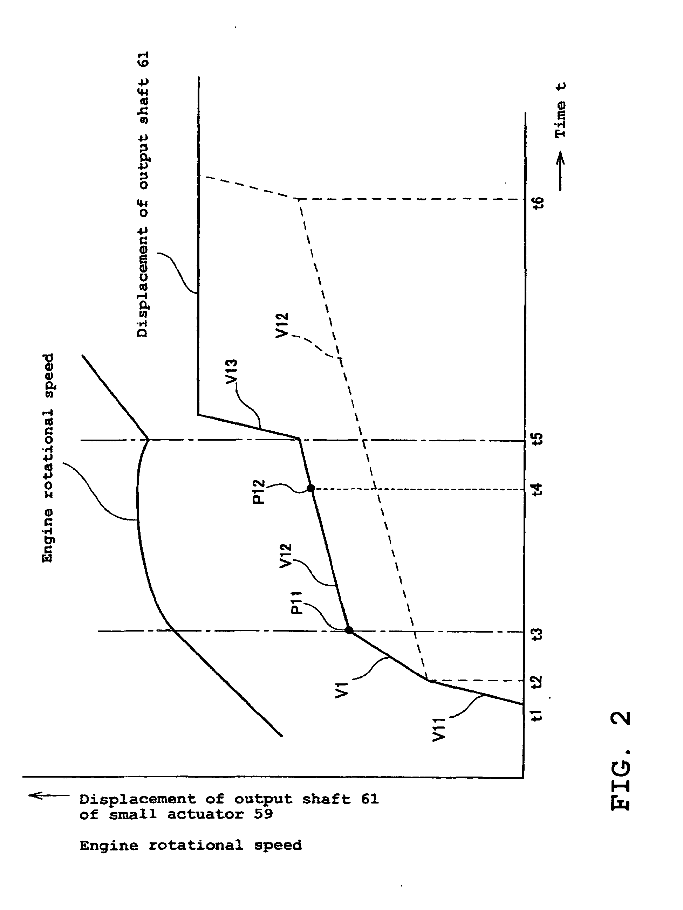

Description will further be made of operations of the clutch engagement control system 100 in Fig. 2.

The horizontal axis of Fig. 2 represents elapsed time as shown in Fig. 5. The vertical axis of Fig. 2 also represents displacement of the output shaft 61 of the small actuator 59 as shown in Fig. 5. In Fig. 2, the vertical axis additionally represents engine rotational speed.

For example, when the friction clutch 1 is reengaged to start the motorcycle, the output shaft 61 starts to be displaced rightward in Fig. 4 at time t1 and continues to be displaced at relatively high velocity, V11, until time t2, which is the same velocity as in the case of the conventional clutch engagement control system 200 shown in Fig. 5.

The displacement velocity of the output shaft 61 is then decreased at time t2 to velocity V1, at which the output shaft 61 is displaced rightward in Fig. 4, such that the pressure plate 31 is accordingly displaced leftward in Fig. 1 at the first engagement velocity that causes less shock even at the start of engagement of the friction clutch 1.

Following that, the point to start engaging the clutch, P11, is reached at time t3. In other words, the magnetostrictive sensor 71 detects the start of engagement of the friction clutch 1. Then, the output shaft 61 is displaced rightward in Fig. 1 at velocity V12 such that the pressure plate 31 is accordingly displaced at displacement velocity, for example, at which the clutch is half-engaged.

Continuing to displace the output shaft 61 rightward in Fig. 4 at velocity V12 allows the friction discs 25 and the pressure plates 29 to be firmly clamped between the pressing portion 31B of the pressure plate 31 and the pressing portion 27B of the inner driver 27. The point to fully engage the clutch with no slide made therebetween, P12, is reached at t4. The output shaft 61 is then displaced rightward in Fig. 1 at increased velocity, V13, at time t5 after a predetermined time period.

The engagement velocity, V11, V12 and V13 shown in Fig. 2 is the same engagement velocity for the conventional clutch engagement control system 200 shown in Fig. 5, V11, V12 and V13.

Fig. 2 illustrates operating conditions of the output shaft 61 with the conventional clutch engagement control system 200 by dashed lines. In the conventional clutch engagement control system 200, the output shaft 61 is gradually displaced at velocity V12 between times t2 and t6.

Thus, it should be understood that the clutch engagement control system 100 according to the embodiment of the present invention can reduce the time required for engaging the friction clutch 1 by the difference between times t6 and t5 compared to the conventional clutch engagement control system 200.

According to the clutch engagement control system 100, the friction clutch 1 is reengaged at the first engagement velocity, which is relatively high, until engagement of the friction clutch 1 starts (start transmitting power), and the engagement velocity is changed to the second engagement velocity lower than the first engagement velocity after the engagement of the friction clutch 1 started. This results in a moderate enhancement of power transmissibility, which reduces time required for engaging the friction clutch 1.

The clutch engagement control system 100 also employs engagement velocity that causes less shock even at the start of engagement of the friction clutch 1 as the first engagement velocity, allowing reduction in shock caused by the friction clutch engagement.

The magnetostrictive sensor 71 in the clutch engagement control system 100 detects the start of engagement of the friction clutch 1 and changes the engagement velocity of the friction clutch 1 based on the detection results. This allows precise detection of the point to start engaging the friction clutch 1 even when this point varies depending on temperature while allowing reduction in time required for engaging the friction clutch 1.

The clutch engagement control system 100 detects the point to start engaging the friction clutch 1 by means of the magnetostrictive sensor 71. However, at least either one of the magnetostrictive sensor 71, a magnetostrictive sensor 73 and a magnetostrictive sensor 75 both shown in Fig. 1, and a chain tension detecting sensor 81 shown in Fig. 3 may be used to detect the point to start engaging the friction clutch 1.

The magnetostrictive sensor 73 can detect torque generated on the counter shaft 9 interlocked with the mission shaft 7 via the multistage transmission 5 to receive torque transmission. The sensor 73 is placed on the end of the countershaft 9 protruding outward of the engine gearcase CS1. Here, the position where the magnetostrictive sensor 73 is placed is not limited to the position described above as long as the magnetostrictive sensor 73 can detect torque generated on the countershaft 9.

The magnetostrictive sensor 75 is interlocked with the countershaft 9 via a chain 19, and can detect torque generated on the rear wheel shaft 15 transmitting drive torque to the rear wheel 13.

The chain tension detecting sensor 81 detects the tension in the upper portion of the chain 19 wound around the countershaft sprocket 11 and the rear wheel sprocket 17 to transmit torque to the rear wheel 13 as shown in Fig. 3.

Since no tension is applied to the chain 19 in the state that the friction clutch 1 is disengaged and no torque is transmitted from the countershaft 9 to the rear wheel shaft 17, the upper middle part of the chain 19 is loosen downward in Fig. 3.

When engagement of the friction clutch 1 starts under this condition, torque starts to be transmitted from the countershaft 9 to the rear wheel shaft 15, which results in tension applied to the chain 19. This allows the upper middle part of the chain 19 loosening downward in Fig. 3 to be stretched, in other words, generally straight, thereby moving it up in Fig. 3.

The chain tension detecting sensor 81 detects the start of engagement of the friction clutch 1 through detecting the movements of the chain 19.

Description will here be made of configuration of the chain tension detecting sensor 81.

The chain tension detecting sensor 81 comprises an arm member 85 having one end rotatably mounted to a motorcycle frame via a pin 83 on the surface perpendicular to the rotational axis of the rear wheel sprocket 17, a circular roller 89 mounted to the other end of the arm member 85 via a pin 87 and rotatable around the rotational axis parallel to the rotational axis of the rear wheel sprocket 17, and a pressing member 91 having one end rotatably mounted to the motorcycle frame and the other end rotatably mounted to the middle part of the arm member 85, while normally urging the roller 89 to press the chain 19 by urging force produced by the compression springs 93 in the longitudinal direction.

When engagement of the friction clutch 1 starts, tension is applied to the chain 19, which allows the upper middle part of the chain 19 to be stretched. The arm member 85 then rotates upward around the pin 83, which is detected by a limit switch (not shown) or a proximity switch (not shown).

In the above embodiment, the rear wheel 13 is driven by using the chain 19, however, a belt such as a timing belt may be used instead of the chain 19.

A bar-shaped drive shaft having bevel gears integrally provided on its both ends may be substituted for the chain or belt to transmit torque from the countershaft 9 to the rear wheel shaft 15 to drive the rear wheel 13. In this case, the magnetostrictive sensor may detect torque generated on the bar-shaped drive shaft to detect the start of engagement of the friction clutch 1.

In Fig. 2, the engine rotational speed increases at a predetermined rate until time t3 corresponding to the point to start engaging the clutch, P11. Its increasing rate slightly decreases due to the engine load caused by the start of engagement of the friction clutch 1 after time t3.

Means for detecting the engine rotational speed (crankshaft rotational speed) may be provided to determine the point to start engaging the friction clutch 1 based on variations in rate of change of the engine rotational speed as described above and to change the engagement velocity of the friction clutch 1.

The description is made of the example in which the motorcycle starts in the above embodiment of the present invention. However, almost the same control can be performed for shifting gears by means of the multistage transmission 5.

According to the above embodiment, the engagement velocity of the friction clutch 1 is decreased immediately after the magnetostrictive sensor 71 detected the start of engagement of the friction clutch 1. However, the engagement velocity of the friction clutch 1 may be decreased after a short predetermined time period in the event that the magnetostrictive sensor 71 detects the start of engagement of the friction clutch 1.

Torque generated on the mission shaft 7 may be too low to be detected by the magnetostrictive sensor 71 even though engagement of the friction clutch 1 has already started. Thus, the magnetostrictive sensor 71 detects the start of engagement of the friction clutch at time a little later than the engagement of the friction clutch 1 actually started, although it all depends on detection accuracy for the magnetostrictive sensor 71.

In addition, the rotational speed of the rotational shaft of the gear 21, which is directly connected to the engine crankshaft, may be detected. The rotational speed of the rotational shaft of the mission shaft 7, which is connected to the engine crankshaft via the friction clutch 1, may also be detected. These two detected rotational speeds are compared to each other, and detecting that no slide or little slide is made between the friction discs 25 and the clutch plates 29 of the friction clutch 1 based on the result of the comparison. Thus, the point to fully engage the friction clutch 1 can also be detected.

The output shaft 61 of the small actuator 59 shown in Fig. 1 is displaced rightward in Fig. 1 at velocity V13 shown in Fig. 2 immediately after the full engagement of the friction clutch 1 was detected. As a result, there is no time required between times t4 and t5 shown in Fig. 2, and thereby the time required for engaging the friction clutch 1 can be further reduced.

Also as shown in Fig. 2, in the clutch engagement control system 100, time t5 is calculated by a timer control based on time t3 at which the point to start engaging the clutch, P11, is reached. The output shaft 61 of the small actuator 59 is adapted to be displaced at high displacement velocity, V13, by determining that the friction clutch 1 is fully engaged at the time t5. However, the time t5 may be set earlier than time t4 at which the point to fully engage the clutch, P12, is reached, for example, to time at which the friction discs 25 and the clutch plates 29 of the friction clutch 1 slide at low velocity even though the friction clutch 1 has not been fully engaged. This also allows reduction in time required for engaging the friction clutch 1.

In the above embodiment, controlling displacement velocity of the pressure plate 31 of the friction clutch 1 by means of the small actuator 59 and the actuator 3 allows the engagement velocity of the friction clutch 1 to be controlled. However, any method may be employed if the method is configured to control displacement velocity of the pressure plate 31.

The clutch engagement control system 100 as the embodiment of the present invention may be employed for clutch engagement control for motorcycles with full automatic or semi-automatic transmission.

The clutch engagement control system 100 as the embodiment of the present invention may also be employed for vehicles or industrial machines (including automobiles, tractors and bulldozers) with the clutch engagement control system other than for motorcycles.

Furthermore, in Fig. 2, the displacement velocities of the output shaft 61 of the small actuator 59, V1 and V12; remain constant ("0" acceleration), and accordingly the displacement velocity of the pressure plate 31 of the friction clutch 1 also remains constant. However, they are not necessarily constant but may be changed to the extent that velocity V1 is higher than velocity V12 and accordingly the straight lines shown in Fig. 2 to arbitrary curves.

As explained above, a clutch engagement control system for engaging a friction clutch by means of an actuator is provided, comprising detecting means for detecting the state of power transmission over the friction clutch, and control means for controlling the actuator so as to engage the friction clutch at first engagement velocity until the detecting means detects the start of the power transmission, and to change the engagement velocity to a constant second engagement velocity lower than the first engagement velocity when the detecting means detects the start of the power transmission such that the friction clutch starts transmitting power after no power transmitted over the friction clutch, and the power transmissibility is gradually enhanced until the friction clutch is fully engaged.

Therein, preferably the friction clutch used for a motorcycle transmits torque from an engine crankshaft to a mission shaft made up of a drive shaft in a transmission, wherein the detecting means detects the start of the power transmission over the friction clutch by using a torque sensor for detecting torque generated on the mission shaft, a torque sensor for detecting torque generated on the countershaft interlocked with the mission shaft via the transmission, a torque sensor interlocked with the countershaft via a chain or belt for detecting torque generated on a rear wheel shaft that transmits drive torque to a rear wheel, or a deflection detecting sensor for detecting the chain or the belt deflection, and wherein the control means controls displacement velocity of the actuator for displacing a pressure plate clamping friction plates on which frictional force for transmitting torque over the friction clutch is generated in the direction in which the friction plates are engaged, and the first engagement velocity causes less shock when the friction clutch starts transmitting power while the constant second engagement velocity allows the clutch to be half-engaged.

Alternatively or additionally, the friction clutch used for motorcycles transmits torque from the engine crankshaft to the mission shaft made up of the drive shaft in the transmission, wherein the detecting means detects the start of power transmission over the friction clutch by using a torque sensor for detecting torque generated on a bar-shaped drive shaft for transmitting torque from the countershaft interlocked with the mission shaft via the transmission to the rear wheel shaft that drives the rear wheel, and wherein the control means controls displacement velocity of the actuator for displacing the pressure plate clamping the friction plates on which frictional force for transmitting torque over the friction clutch is generated in the direction in which the friction plates are engaged, and the first engagement velocity causes less shock when the friction clutch starts transmitting power while the constant second engagement velocity allows the clutch to be half-engaged.

## Claims

1. A clutch engagement control system and a friction clutch (1), the system provided to engage the friction clutch comprising a plurality of friction plates and being provided with a pressure plate (31) by means of an actuator (59) and further comprising:
first detecting means (71, 73, 75, 81) for detecting the state of power transmission over the friction clutch (1), and control means (100) for controlling the actuator (59), so as to displace the pressure plate (31) in the direction in which the friction plates are engaged at a first engagement velocity (V1, V11) until the first detecting means (71, 73, 75, 81) detects the start of the power transmission, and to change the engagement velocity to a constant second engagement velocity (V12) lower than the first engagement velocity (V1, V11) when the first detecting means (71, 73, 75, 81) detects the start of the power transmission such that the friction clutch (1) starts transmitting power after no power transmitted over the friction clutch (1), and the power transmissibility is gradually enhanced until the friction clutch (1) is fully engaged.

2. Clutch control system according to claim 1, **characterized by** a second detecting means for detecting a difference between two rotational speeds, in particular a rotational speed of the mission shaft (7) and a rotational speed of a gear (21) connected to an engine crankshaft.

3. Clutch control system according to claim 1 or 2, **characterized in that** the clutch control system is configured to change the engagement velocity of the actuator (59) from a second engagement velocity (V12) to a third engagement velocity (V13), wherein the third engagement velocity (V13) is larger than the second engagement velocity (V12), upon detection of a full engagement of the friction clutch (1) by the second detecting means.

4. Clutch control system according to claim 1 or 2, **characterized in that** the clutch control system is configured to change the engagement velocity of the actuator (59) from a second engagement velocity (V12) to a third engagement velocity (V13), wherein the third engagement velocity (V13) is larger than the second engagement velocity (V12), upon detection of a condition wherein friction discs (25) and clutch plates (29) of the friction clutch (1) slide at low velocity even though the friction clutch (1) has not been fully engaged.

5. Clutch control system according to at least one of the claims 1 to 4, **characterized in that** the second engagement velocity (V12) represents a velocity of the actuator (59) just after the change of velocity.

6. Clutch control system according to at least one of the claims 1 to 4, **characterized in that** the second engagement velocity (V12) represents a velocity of the actuator (59) just before the change of velocity.

7. Clutch control system according to at least one of the claims 1 to 6, wherein the friction clutch (1) transmits torque from a power input shaft, in particular being an engine crankshaft, to a mission shaft (7) of a transmission (5), **characterized in that** the detecting means (71,73,75,81) is configured to detect the start of the power transmission over the friction clutch (1) by means of a torque sensor (71) for detecting torque generated on the mission shaft (7), a torque sensor (73) for detecting torque generated on the countershaft (9) interlocked with the mission shaft (7) via the transmission (5), a torque sensor (75) interlocked with the countershaft (9) via a chain (19) or belt for detecting torque generated on a power output shaft, in particular a rear wheel shaft (15), that transmits drive torque to a drive means, in particular a rear wheel (13), and/or a deflection detecting sensor (81) for detecting the chain (19) or the belt deflection.

8. Clutch control system according to at least one of the claims 1 to 7, wherein the friction clutch (1) transmits torque from a power input shaft, in particular being an engine crankshaft, to a mission shaft (7) being a drive shaft in the transmission (5), **characterized in that** the detecting means (71,73,75,81) is configured to detect the start of the power transmission over the friction clutch (1) by means of a torque sensor (71) for detecting torque generated on a bar-shaped drive shaft for transmitting torque from a countershaft (9) interlocked with the mission shaft (7) via the transmission (5) to the power output shaft, in particular a rear wheel shaft (15), that drives a drive means, in particular a rear wheel (13).

9. Clutch control system according to at least one of the claims 1 to 8, **characterized in that** the first engagement velocity (V1, V11) is chosen to cause less shock when the friction clutch (1) starts transmitting power while the second engagement velocity (V12) is chosen to allow the friction clutch (1) to be half-engaged.

10. Clutch control system according to at least one of the claims 1 to 9, **characterized in that** the control means (100) is configured to change the second engagement velocity (V12) to a third engagement velocity (V13) when the detection means (71,73,75,81) detects that the friction clutch (1) is fully engaged.

11. Clutch control system according to claim 10, **characterized in that** said third engagement velocity (V13) is higher than said second engagement velocity (V12).

12. Machine, in particular being a vehicle, preferably an automobile or a motorcycle, comprising a power drive unit, in particular an engine, and a power output means, in particular a drive shaft (15) connectable to a drive wheel (13), and a friction clutch (1) interposed between the power drive unit and the power output means, **characterized in that** a clutch control system (100) according to at least one of the claims 1 to 11 is provided for engaging the friction clutch (1).

## Patentansprüche

1. Kupplungseingriff-Steuersystem und eine Reibungskupplung (1), wobei das System dazu vorgesehen ist, die Reibungskupplung, die eine Vielzahl von Reibplatten umfasst und mit einer Druckplatte (31) ausgestattet ist, mittels eines Betätigungsorgans (59) in Eingriff zu bringen und das außerdem umfasst:
eine erste Erfassungseinrichtung (71, 73, 75, 81) zum Erfassen des Zustandes der Kraftübertragung über die Reibungskupplung (1) und eine Steuereinrichtung (100) zum Steuern des Betätigungsorgans (59), um die Druckplatte (31) in die Richtung zu verschieben, in der die Reibplatten in Eingriff gebracht werden mit einer ersten Eingriffsgeschwindigkeit (V1, V11) bis die erste Erfassungseinrichtung (71, 73, 75, 81) den Beginn der Kraftübertragung erfasst und um die Eingriffsgeschwindigkeit auf eine konstante zweite Eingriffsgeschwindigkeit (V12) zu ändern, die niedriger als die erste Eingriffsgeschwindigkeit (V1, V11) ist, wenn die erste Erfassungseinrichtung (71, 73, 75, 81) den Beginn der Kraftübertragung erfasst, solcher Art, dass die Reibungskupplung (1) die Kraftübertragung beginnt, nachdem keine Kraft über die Reibungskupplung (1) übertragen wurde, und wobei die Kraftübertragbarkeit graduell erhöht wird, bis die Reibungskupplung (1) vollständig in Eingriff ist.

2. Kupplungssteuersystem nach Anspruch 1, **gekennzeichnet durch** eine zweite Erfassungseinrichtung zum Erfassen einer Differenz zwischen zwei Drehzahlen, insbesondere einer Drehzahl der Getriebewelle (7) und einer Drehzahl eines Zahnrads (21), das mit einer Motorkurbelwelle verbunden ist.

3. Kupplungssteuersystem nach Anspruch 1 oder 2, **dadurch gekennzeichnet, dass** das Kupplungssteuersystem so gestaltet ist, dass die Eingriffsgeschwindigkeit des Betätigungsorgans (59) von einer zweiten Eingriffsgeschwindigkeit (V12) auf eine dritte Eingriffsgeschwindigkeit (V13) geändert wird, wobei die dritte Eingriffsgeschwindigkeit (V13) größer als die zweite Eingriffsgeschwindigkeit (V12) ist, bis zur Erfassung eines vollständigen Eingriffs der Reibungskupplung (1) durch die zweite Erfassungseinrichtung.

4. Kupplungssteuersystem nach Anspruch 1 oder 2, **dadurch gekennzeichnet, dass** das Kupplungssteuersystem so gestaltet ist, dass die Eingriffsgeschwindigkeit des Betätigungsorgans (59) von einer zweiten Eingriffsgeschwindigkeit (V12) auf eine dritte Eingriffsgeschwindigkeit (V13) geändert wird, wobei die dritte Eingriffsgeschwindigkeit (V13) größer als die zweite Eingriffsgeschwindigkeit (V12) ist, bis zur Erfassung eines Zustandes, in welchem Reibscheiben (25) und Kupplungsplatten (29) der Reibkupplung (1) mit einer niedrigen Geschwindigkeit rutschen obgleich die Reibungskupplung (1) nicht vollständig in Eingriff ist.

5. Kupplungssteuersystem nach mindestens einem der Ansprüche 1 bis 4, **dadurch gekennzeichnet, dass** die zweite Eingriffsgeschwindigkeit (V12) eine Geschwindigkeit des Betätigungsorgans (59) kurz nach der Änderung der Geschwindigkeit repräsentiert.

6. Kupplungssteuersystem nach mindestens einem der Ansprüche 1 bis 4, **dadurch gekennzeichnet, dass** die zweite Eingriffsgeschwindigkeit (V12) eine Geschwindigkeit des Betätigungsorgans (59) kurz vor der Änderung der Geschwindigkeit repräsentiert.

7. Kupplungssteuersystem nach mindestens einem der Ansprüche 1 bis 6, wobei die Reibungskupplung (1) ein Drehmoment von einer Krafteingangswelle, insbesondere einer Motorkurbelwelle, auf eine Getriebewelle (7) eines Getriebes (5) überträgt, **dadurch gekennzeichnet, dass** die Erfassungseinrichtung (71, 73, 75, 81) so gestaltet ist, dass sie den Beginn der Kraftübertragung über die Reibungskupplung (1) mittels eines Drehmomentsensors (71) zum Erfassen des Drehmoments, das an der Getriebewelle (7) erzeugt wird, erfasst, mittels eines Drehmomentsensors (73) zum Erfassen des Drehmoments, das an der Vorgelegewelle (9), die mit der Getriebewelle (9) über das Getriebe (5) verblockt ist, erfasst, mittels eines Drehmomentsensors (75), das mit der Vorgelegewelle (9) über eine Kette (19) oder einen Riemen zum Erfassen des Drehmoments, das an einer Kraftausgangswelle, insbesondere einer Hinterradwelle (15), die ein Antriebsdrehmoment auf eine Antriebseinrichtung, insbesondere ein Hinterrad (13), überträgt, erfasst und/oder mittels eines Auslenkungserfassungssensors (81) zum Erfassen der Auslenkung der Kette (19) oder des Riemens erfasst.

8. Kupplungssteuersystem nach mindestens einem der Ansprüche 1 bis 7, wobei die Reibungskupplung (1) ein Drehmoment von einer Krafteingangswelle, insbesondere einer Motorkurbelwelle, auf eine Getriebewelle (7), die eine Antriebswelle in dem Getriebe (5) ist, überträgt, **dadurch gekennzeichnet, dass** die Erfassungseinrichtung (71, 73, 75, 81) so gestaltet ist, dass sie den Beginn der Kraftübertragung über die Reibungskupplung (1) erfasst mittels eines Drehmomentsensors (71) zum Erfassen des Drehmoments, das auf einer stabförmigen Antriebswelle erzeugt wird, zum Übertragen des Drehmoments von einer Vorgelegewelle (9), die mit der Getriebewelle (7) verblockt ist, über das Getriebe (5) auf die Kraftausgangswelle, insbesondere eine Hinterradwelle (15), die eine Antriebseinrichtung, insbesondere ein Hinterrad (13) antreibt.

9. Kupplungssteuersystem nach mindestens einem der Ansprüche 1 bis 8, **dadurch gekennzeichnet, dass** die erste Eingriffsgeschwindigkeit (V1, V11) so ausgewählt ist, dass sie einen geringen Ruck bewirkt, wenn die Reibungskupplung (1) die Kraftübertragung beginnt, währenddessen die zweite Eingriffsgeschwindigkeit (V12) so gewählt ist, dass sie der Reibungskupplung (1) einen Halb-Eingriff ermöglicht.

10. Kupplungssteuersystem nach mindestens einem der Ansprüche 1 bis 9, **dadurch gekennzeichnet, dass** die Steuereinrichtung (100) so gestaltet ist, dass sie die zweite Eingriffsgeschwindigkeit (V12) auf eine dritte Eingriffsgeschwindigkeit (V13) ändert, wenn die Erfassungseinrichtung (71, 73, 75, 81) erfasst, dass die Reibungskupplung (1) vollständig in Eingriff ist.

11. Kupplungssteuersystem nach Anspruch 10, **dadurch gekennzeichnet, dass** die dritte Eingriffsgeschwindigkeit (V13) höher als die zweite Eingriffsgeschwindigkeit (V12) ist.

12. Maschine, insbesondere ein Fahrzeug, bevorzugterweise ein Kraftfahrzeug oder ein Motorrad, das eine Kraftantriebseinheit, insbesondere einen Motor, und eine Kraftausgangseinrichtung, insbesondere eine Antriebswelle (15), die mit einem Antriebsrad (13) verbindbar ist, umfasst, und eine Reibungskupplung (1), die zwischen der Kraftantriebseinheit und der Kraftausgangseinrichtung angeordnet ist, umfasst, **dadurch gekennzeichnet, dass** ein Kupplungssteuersystem (100) nach mindestens einem der Ansprüche 1 bis 11 zum Einrücken der Reibungskupplung (1) vorgesehen ist.

## Revendications

1. Système de commande d'engagement d'embrayage et embrayage à friction (1), ce système prévu pour engager l'embrayage à friction comprenant une pluralité de plateaux de friction et étant pourvu d'un plateau de pression (31) au moyen d'un actionneur (59), comprenant en outre :
- de premiers moyens de détection (71, 73, 75, 81) pour détecter l'état de transmission de puissance par l'embrayage à friction (1) et des moyens de commande (100) pour commander l'actionneur (59), de façon à déplacer le plateau de pression (31) dans la direction dans laquelle les plateaux de friction sont engagés à une première vélocité d'engagement (V1, V11), jusqu'à ce que les premiers moyens de détection (71, 73, 75, 81) détectent le début de la transmission de puissance, et à changer la vélocité d'engagement à une deuxième vélocité d'engagement (V12) constante inférieure à la première vélocité d'engagement (V1, V11) lorsque les premiers moyens de détection (71, 73, 75, 81) détectent le début de la transmission de puissance, de sorte que l'embrayage à friction (1) commence à transmettre une puissance après qu'aucune puissance n'ait été transmise par l'embrayage à friction (1), et la transmissibilité est graduellement améliorée jusqu'à ce que l'embrayage à friction (1) soit complètement engagé.

2. Système de commande d'embrayage selon la revendication 1, **caractérisé par** de deuxièmes moyens de détection pour détecter une différence entre deux vitesses de rotation, en particulier une vitesse de rotation de l'arbre de mission (7) et une vitesse de rotation d'un pignon (21) connecté au vilebrequin d'un moteur.

3. Système de commande d'embrayage selon les revendications 1 ou 2, **caractérisé en ce que** ce système de commande d'embrayage est configuré pour changer la vélocité d'engagement de l'actionneur (59) d'une deuxième vélocité d'engagement (V12) à une troisième vélocité d'engagement (V13), dans lequel la troisième vélocité d'engagement (V13) est supérieure à la deuxième vélocité d'engagement (V12), lors de la détection d'un engagement complet de l'embrayage à friction (1) par les deuxièmes moyens de détection.

4. Système de commande d'embrayage selon les revendications 1 ou 2, **caractérisé en ce que** ce système de commande d'embrayage est configuré pour changer la vélocité d'engagement de l'actionneur (59) d'une deuxième vélocité d'engagement (V12) à une troisième vélocité d'engagement (V13), pour lequel la troisième vélocité d'engagement (V13) est supérieure à la deuxième vélocité d'engagement (V12), lors de la détection d'une condition dans laquelle des disques de friction (25) et des plateaux d'embrayage (29) de l'embrayage à friction (1) glisse à basse vélocité bien que l'embrayage à friction (1) n'ait pas été complètement engagé.

5. Système de commande d'embrayage selon au moins une des revendications 1 à 4, **caractérisé en ce que** la deuxième vélocité d'engagement (V12) représente une vélocité de l'actionneur (59) juste après le changement de vélocité.

6. Système de commande d'embrayage selon au moins une des revendications 1 à 4, **caractérisé en ce que** la deuxième vélocité d'engagement (V12) représente une vélocité de l'actionneur (59) juste avant le changement de vélocité.

7. Système de commande d'embrayage selon au moins une des revendications 1 à 6, dans lequel l'embrayage à friction (1) transmet un couple d'un arbre d'entrée de puissance, en particulier étant le vilebrequin d'un moteur, à un arbre de mission (7) d'une transmission (5), **caractérisé en ce que** les moyens de détection (71, 73, 75, 81) sont configurés pour détecter le début de la transmission de puissance par l'embrayage à friction (1) au moyen d'un capteur de couple (71) pour détecter un couple généré sur le contre-arbre (9) interverrouillé avec l'arbre de mission (7) via la transmission (5), un capteur de couple (75) interverrouillé avec le contre-arbre (9) via une chaine (19) ou une courroie pour détecter un couple généré sur un arbre de sortie de puissance, en particulier un arbre de roue arrière (15), transmettant un couple d'entrainement à des moyens à entrainer, en particulier une roue arrière (13), et/ou un capteur de détection de déflexion (81) pour détecter une déflexion de la chaine (19) ou de la courroie.

8. Système de commande d'embrayage selon au moins une des revendications 1 à 7, dans lequel l'embrayage à friction (1) transmet un couple d'un arbre d'entrée de puissance, en particulier étant le vilebrequin d'un moteur, à un arbre de mission (7) étant un arbre à entrainer dans la transmission (5), **caractérisé en ce que** les moyens de détection (71, 73, 75, 81) sont configurés pour détecter le début de la transmission de puissance par l'embrayage à friction (1) au moyen d'un capteur de couple (71) pour détecter un couple généré sur un arbre à entrainer en forme de barre pour transmettre un couple, d'un contre-arbre (9) interverrouillé avec l'arbre de mission (7) via la transmission (5), à l'arbre de sortie de puissance, en particulier un arbre de roue arrière (15), entrainant des moyens à entrainer, en particulier une roue arrière (13).

9. Système de commande d'embrayage selon au moins une des revendications 1 à 8, **caractérisé en ce que** la première vélocité d'engagement (V1, V11) est choisie pour occasionner moins de chocs lorsque l'embrayage à friction (1) commence à transmettre une puissance, tandis que la deuxième vélocité d'engagement (V12) est choisie pour permettre à l'embrayage à friction (1) d'être à moitié engagé.

10. Système de commande d'embrayage selon au moins une des revendications 1 à 9, **caractérisé en ce que** les moyens de commande (100) sont configurés pour changer la deuxième vélocité d'engagement (V12) en une troisième vélocité d'engagement (V13) lorsque les moyens de détection (71, 73, 75, 81) détectent que l'embrayage à friction (1) est complètement engagé.

11. Système de commande d'embrayage selon la revendication 10, **caractérisé en ce que** ladite troisième vélocité d'engagement (V13) est supérieure à ladite deuxième vélocité d'engagement (V12).

12. Machine, en particulier étant un véhicule, de préférence une automobile ou une motocyclette, comprenant une unité d'entrainement de puissance, en particulier un moteur, et des moyens de sortie de puissance, en particulier un arbre à entrainer (15) susceptible d'être connecté à une roue à entrainer (13), et un embrayage à friction (1) interposé entre l'unité d'entrainement de puissance et les moyens de sortie de puissance, **caractérisée en ce qu'**un système de commande d'embrayage (100) selon au moins une des revendications 1 à 11 est prévu pour engager l'embrayage à friction (1).
